(19) Europäisches Patentamt
European Patent Office
Office européen des brevets

(11) EP 2 138 537 B1

(12) **EUROPEAN PATENT SPECIFICATION**

(45) Date of publication and mention of the grant of the patent:
**16.01.2019 Bulletin 2019/03**

(21) Application number: **08739251.0**

(22) Date of filing: **28.03.2008**

(51) Int Cl.:
***C08L 15/00*** *(2006.01)* ***C08K 3/36*** *(2006.01)*

(86) International application number:
**PCT/JP2008/056133**

(87) International publication number:
**WO 2008/117868 (02.10.2008 Gazette 2008/40)**

(54) **MODIFIED HYDROGENATED DIENE POLYMER COMPOSITION**

MODIFIZIERTE HYDROGENIERTE DIENPOLYMERZUSAMMENSETZUNG

COMPOSITION DE POLYMÈRE DIÉNIQUE HYDROGÉNÉ MODIFIÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.03.2007 JP 2007085999**

(43) Date of publication of application:
**30.12.2009 Bulletin 2009/53**

(73) Proprietor: **JSR Corporation**
**Minato-ku,**
**Tokyo 105-8640 (JP)**

(72) Inventors:
- **HIGUCHI, Motoharu**
  **Tokyo 105-8640 (JP)**
- **SUZUKI, Takahisa**
  **Tokyo 105-8640 (JP)**
- **HASEGAWA, Kenji**
  **Tokyo 105-8640 (JP)**
- **NOSAKA, Naoya**
  **Tokyo 105-8640 (JP)**

(74) Representative: **TBK**
**Bavariaring 4-6**
**80336 München (DE)**

(56) References cited:
**EP-A1- 1 306 393**
**WO-A1-2008/013090**
**JP-A- 2 225 541**
**JP-A- 5 125 108**
**JP-A- H0 260 948**
**JP-A- 2000 086 813**
**JP-A- 2007 326 942**
**US-A1- 2005 171 276**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 138 537 B1

## Description

TECHNICAL FIELD

The present invention relates to a modified hydrogenated diene polymer composition and a rubber molded article. More particularly, the present invention relates to a modified hydrogenated diene polymer composition that can produce a rubber molded article that exhibits excellent vibration-proof properties and the like, and a rubber molded article that exhibits excellent vibration-proof properties and the like.

BACKGROUND ART

A diene rubber (e.g., natural rubber (NR)) has sufficient mechanical properties and exhibits excellent fatigue properties. Therefore, a diene rubber has been widely used as a vibration-proof rubber and the like, conventionally. Such a vibration-proof rubber is generally installed and used in a severe environment (e.g., under high-temperature conditions). For example, when a vibration-proof rubber is used in an automotive engine compartment or the like, the vibration-proof rubber is subjected to a high temperature due to an increase in temperature inside the engine compartment. A vibration-proof rubber used in such a high-temperature environment is required to exhibit sufficient heat resistance in addition to vibration-proof properties. However, since a diene rubber that has been widely used as a vibration-proof rubber does not necessarily exhibit sufficient heat resistance, it has been difficult to use a diene rubber in a high-temperature environment. Therefore, when using a diene rubber as a vibration-proof rubber, the application and the installation location are limited.

On the other hand, an ethylene-α-olefin copolymer rubber exhibits excellent heat resistance, weatherability, and the like. Therefore, ethylene-α-olefin copolymer rubber has been widely used in a wide range of applications (e.g., automotive parts, electric wire covering material, electric insulating material, industrial rubber products, and structural engineering material). An ethylene-α-olefin copolymer rubber is also used as a modifier for plastics such as polypropylene and polystyrene. However, an ethylene-α-olefin copolymer rubber does not necessarily exhibit sufficient mechanical properties, vibration-proof properties, and the like, and is not necessarily suitable as a material for a vibration-proof rubber.

As related art, a rubber composition containing an ethylene-α-olefin copolymer rubber and a crosslinked product obtained by crosslinking a functional group-containing (co)polymer using a metal component (see Patent Document 1, for example), a rubber composition containing an ethylene-α-olefin copolymer rubber, a functional group-containing (co)polymer, and a silica-based filler (see Patent Document 2, for example), and the like have been disclosed. However, a rubber molded article produced using the above rubber composition does not necessarily exhibit sufficient vibration-proofing properties and heat resistance. Moreover, since the above rubber composition does not necessarily exhibit good processability, a further improvement is necessary.

US2005171276 (A1) describes a first-order modified, hydrogenated polymer comprising a hydrogenated polymer obtained by hydrogenating at least one unhydrogenated polymer selected from the group consisting of a polymer comprising conjugated diene monomer units and a copolymer comprising conjugated diene monomer units and vinyl aromatic hydrocarbon monomer units, and a functional group-containing first-order modifier group bonded to the hydrogenated polymer, wherein the content of the vinyl aromatic hydrocarbon monomer units, vinyl aromatic hydrocarbon block ratio, weight average molecular weight, and hydrogenation ratio (as measured with respect to the double bonds in the conjugated diene monomer units) of the first-order modified, hydrogenated polymer are, respectively, within specific ranges. A second-order modified polymer obtained by reacting a second-order modifier with a first-order modified polymer comprising (beta) a base polymer and (gamma) a functional group-containing first-order modifier group bonded to the base polymer (beta). A composition comprising the above-mentioned first-order modified, hydrogenated polymer or second-order modified polymer and at least one functional component other than the modified polymer.

Patent Document 1: JP-A-2004-67831

Patent Document 2: JP-A-2004-83622

DISCLOSURE OF THE INVENTION

The present invention was conceived in view of the above problems. An object of the present invention is to provide a modified hydrogenated diene polymer composition that can produce a rubber molded article that exhibits excellent vibration-proof properties and heat resistance, and a rubber molded article that exhibits excellent vibration-proof properties and heat resistance.

The inventors of the present invention conducted extensive studies in order to achieve the above object. As a result, the inventors found that the above object can be achieved by mixing a diene rubber with a polymer that is obtained

by hydrogenating a diene polymer having a given vinyl bond content and has a weight average molecular weight (Mw), a molecular weight distribution (Mw/Mn), and a hydrogenation rate within given ranges and having one or more functional group. This finding has led to the completion of the present invention.

According to the present invention, the following modified hydrogenated diene polymer composition and rubber molded article are provided.

[1] A modified hydrogenated diene polymer composition as defined in claim 1.
[2] The modified hydrogenated diene polymer composition according to [1], wherein the modified hydrogenated diene polymer (A) containing one or more functional group is a butadiene rubber, a styrene-butadiene rubber, a styrene-butadiene-isoprene random copolymer, or a butadiene-isoprene random copolymer.
[3] The modified hydrogenated diene polymer composition according to [1] or [2], further comprising a silica-based filler.
[4] The modified hydrogenated diene polymer composition according to any one of [1] to [3], wherein the diene rubber (B) is at least one of a natural rubber, a butadiene rubber, a styrene-butadiene rubber, a styrene-butadiene-isoprene random copolymer, and a butadiene-isoprene random copolymer.
[5] A rubber molded article comprising a crosslinked rubber obtained by crosslinking the modified hydrogenated diene polymer composition according to any one of [1] to [4].

The modified hydrogenated diene polymer composition according to the present invention can produce a rubber molded article that undergoes cracking to only a small extent even when used in a high-temperature environment and exhibits excellent vibration-proof properties.

The rubber molded article according to the present invention has excellent high-temperature properties and a good dynamic modulus of elasticity, undergoes cracking to only a small extent even when used in a high-temperature environment, and exhibits excellent vibration-proof properties.

BEST MODE FOR CARRYING OUT THE INVENTION

Preferred embodiments of the present invention are described below. Note that the present invention is not limited to the following embodiments. Various modifications and improvements may be made of the following embodiments without departing from the scope of the present invention based on the knowledge of a person skilled in the art.

1. Modified hydrogenated diene polymer composition

A modified hydrogenated diene polymer composition according to one embodiment of the present invention is defined in claim 1 and includes (A) a modified hydrogenated diene polymer obtained by hydrogenating a diene polymer having a vinyl bond content of 20 to 70%, the modified hydrogenated diene polymer having a weight average molecular weight (Mw) of 100,000 to 1,700,000, a molecular weight distribution (Mw/Mn) of 1.0 to 3.0, and a hydrogenation rate of 72 to 96%, and containing a functional group, and
(B) a diene rubber, the modified hydrogenated diene polymer composition containing the modified hydrogenated diene polymer (A) and the diene rubber (B) in an amount of 100 parts by mass in total, the amount of the modified hydrogenated diene polymer (A) being 60 to 95 parts by mass, and the amount of the diene rubber (B) being 5 to 40 parts by mass. The details of the modified hydrogenated diene polymer composition are described below.

(Modified hydrogenated diene polymer (A))

The component (A) included in the modified hydrogenated diene polymer composition according to this embodiment is a modified hydrogenated diene polymer. The component (A) is obtained by hydrogenating a specific modified diene polymer.

(Diene polymer)

The type and the structure of the diene polymer (hereinafter may be referred to as "unhydrogenated polymer") used to obtain the component (A) are not particularly limited. The diene polymer may be a homopolymer or a copolymer. Specific examples of the diene polymer include a butadiene rubber (BR), a styrene-butadiene rubber (SBR), a styrene-butadiene-isoprene random copolymer, a butadiene-isoprene random copolymer, and the like. Among these, a BR or a butadiene-isoprene random copolymer is preferably used.

The vinyl bond content of the unhydrogenated polymer is 20 to 70%, preferably 30 to 60%, and more preferably 35 to 45%. If the vinyl bond content of the diene polymer is less than 20%, the low-temperature properties of the modified

hydrogenated diene polymer composition may considerably deteriorate due to an increase in heat of fusion. If the vinyl bond content of the diene polymer is more than 70%, the vibration-proof properties of the modified hydrogenated diene polymer composition may deteriorate.

(Hydrogenation)

The hydrogenation rate of the component (A) is 72 to 96%, preferably 74 to 95%, and more preferably 80 to 93%. If the hydrogenation rate of the component (A) is less than 72%, the heat aging properties of the modified hydrogenated diene polymer composition may deteriorate. If the hydrogenation rate of the component (A) is more than 96%, the vibration-proof properties of the modified hydrogenated diene polymer composition may deteriorate due to a low crosslink density.

The hydrogenation method and the hydrogenation conditions are not particularly limited. The diene polymer is normally hydrogenated at a temperature of 20 to 150°C and a hydrogen pressure of 0.1 to 10 MPa in the presence of a hydrogenation catalyst. The hydrogenation rate may be arbitrarily adjusted by changing the amount of the hydrogenation catalyst, the hydrogen pressure during hydrogenation, the reaction time, and the like. As the hydrogenation catalyst, a compound containing a group Ib, IVb, Vb, VIb, VIIb, or VIII metal of the periodic table is normally used. For example, a compound containing Ti, V, Co, Ni, Zr, Ru, Rh, Pd, Hf, Re, or Pt may be used as the hydrogenation catalyst. Specific examples of the hydrogenation catalyst include a metallocene compound containing Ti, Zr, Hf, Co, Ni, Pd, Pt, Ru, Rh, Re, or the like; a supported heterogeneous catalyst prepared by causing a metal (e.g., Pd, Ni, Pt, Rh, or Ru) to be supported on a carrier (e.g., carbon, silica, alumina, or diatomaceous earth); a homogeneous Ziegler catalyst prepared by combining an organic salt or an acetylacetone salt of a metal element (e.g., Ni or Co) with a reducing agent (e.g., organoaluminum); an organometallic compound or a complex of Ru, Rh, or the like; fullerene or a carbon nanotube that stores hydrogen; and the like.

Among these, it is preferable to use a metallocene compound containing Ti, Zr, Hf, Co, or Ni, since the diene polymer can be hydrogenated in an inert organic solvent in a homogeneous system. It is more preferable to use a metallocene compound containing Ti, Zr, or Hf. A hydrogenation catalyst obtained by reacting a titanocene compound with an alkyllithium is particularly preferable from the viewpoint of cost and industrial utility. Specific examples include the hydrogenation catalysts disclosed in JP-A-1-275605, JP-A-5-271326, JP-A-5-271325, JP-A-5-222115, JP-A-11-292924, JP-A-2000-37632, JP-A-59-133203, JP-A-63-5401, JP-A-62-218403, JP-A-7-90017, JP-B-43-19960, and JP-B-47-40473. These hydrogenation catalysts may be used either individually or in combination.

(Weight average molecular weight (Mw))

The weight average molecular weight (Mw) of the component (A) is 100,000 to 1,700,000, preferably 150,000 to 1,700,000, and more preferably 150,000 to 1,500,000. If the weight average molecular weight (Mw) of the component (A) is less than 100,000, the processability of the modified hydrogenated diene polymer composition may deteriorate due to a decrease in viscosity. If the weight average molecular weight (Mw) of the component (A) is more than 1,700,000, the processability of the modified hydrogenated diene polymer composition may deteriorate due to an increase in viscosity. The term "weight average molecular weight (Mw)" used herein refers to a polystyrene-reduced weight average molecular weight determined by gel permeation chromatography (GPC) at 130°C.

(Molecular weight distribution (Mw/Mn))

The molecular weight distribution (Mw/Mn) of the component (A) is 1.0 to 3.0, preferably 1.0 to 2.5, and more preferably 1.0 to 2.0. If the molecular weight distribution (Mw/Mn) of the component (A) is more than 3.0, vibration-proof properties may deteriorate. The molecular weight distribution is indicated by the ratio of the weight average molecular weight (Mw) to the number average molecular weight (Mn). The term "number average molecular weight (Mn)" used herein refers to a polystyrene-reduced number average molecular weight determined by gel permeation chromatography (GPC) at 130°C.

(Functional group)

The component (A) is a modified polymer containing one or more functional group in the molecular chain. Since the component (A) included in the modified hydrogenated diene polymer composition according to this embodiment is a modified polymer, the component (A) mixed with a filler reacts with the filler so that the dispersibility of the filler in the composition can be improved. Therefore, the vibration-proof properties of the modified hydrogenated diene polymer composition can be improved due to an increase in static-dynamic ratio while improving the high-temperature properties of the modified hydrogenated diene polymer composition.

The functional groups introduced into the component (A) are chosen among an amino group and an alkoxy group. Further functional groups are a carboxyl group, an alkoxysilyl group, an epoxy group, an amino group, a hydroxyl group, a sulfone group, an oxazoline group, an isocyanate group, a thiol group, or a halogen atom (at least one of fluorine, chlorine, bromine, and iodine). One or more types of functional groups may be introduced into a single molecular chain. Note that the term "carboxyl group" includes a normal carboxyl group (-COOH) and a group that produces a carboxyl group by hydrolysis. Examples of the group that produces a carboxyl group by hydrolysis include an anhydrous carboxyl group shown by the following formula (1), an ester group, an amide group, and the like.

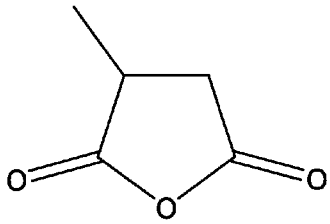

(1)

The functional group in the present invention is introduced into the component (A) by reacting a polymerization terminator containing a functional group with the active site of the diene polymer. An arbitrary method for introduction of a functional group into the component (A) may be by polymerization using a polymerization initiator containing a functional group or reacting an unsaturated monomer containing a functional group. These methods may be used either individually or in combination.

The number of functional groups contained in a single molecular chain of the component (A) is 0.1 to 5.0, and preferably 1 to 5.0. If the number of functional groups is less than 0.1, the effect achieved by introducing the functional group may be insufficient.

Note that the term "number of functional groups contained in a single molecular chain" (i.e., functional group content (= number of functional groups / polymer (single molecular chain)) used herein refers to a value determined by titration or the like. For example, when the functional group is an amino group, the functional group content is determined by the amine titration method described in Analy. Chem. 564 (1952). Specifically, a polymer solution is prepared by dissolving a purified polymer in an organic solvent, and $HClO_4/CH_3COOH$ is added dropwise to the polymer solution until the color of the polymer solution changes from purple to light blue using methyl violet as an indicator. The functional group content is calculated from the amount of $HClO_4/CH_3COOH$ added.

(Diene rubber (B))

The diene rubber (B) according to this embodiment is at least one of a natural rubber, a butadiene rubber, a styrene-butadiene rubber, a styrene-butadiene-isoprene random copolymer, and a butadiene-isoprene random copolymer. The diene rubber may be a modified diene rubber containing one or more functional group in the molecular chain. The description relating to the component (A) also applies to a functional group that may be introduced into the component (B), a method of introducing a functional group into the component (B), and the like.

(Modified hydrogenated diene polymer composition)

The modified hydrogenated diene polymer composition according to this embodiment includes 60 to 95 parts by mass of the component (A), and 5 to 40 parts by mass, preferably 10 to 30 parts by mass, and more preferably 15 to 25 parts by mass of the component (B). If the amount of the component (A) is 100 parts by mass and the amount of the component (B) is less than 5 parts by mass, sufficient strength may not be obtained. If the amount of the component (B) is more than 40 parts by mass, the vibration-proof properties of the modified hydrogenated diene polymer composition may deteriorate.

(Other components)

(Filler)

The modified hydrogenated diene polymer composition according to this embodiment may include a filler. If the modified hydrogenated diene polymer composition includes the filler, the strength of the modified hydrogenated diene polymer composition can be improved. Examples of a preferable filler include silica, carbon black, glass fibers, glass powder, glass beads, mica, calcium carbonate, potassium titanate whiskers, talc, clay, barium sulfate, glass flakes,

a fluororesin, and the like. In particular, silica, carbon black, glass fibers, mica, potassium titanate whiskers, talc, clay, barium sulfate, glass flakes, and a fluororesin are preferable. Among these, silica and carbon black are more preferable. It is more preferable to use silica, and is particularly preferable to use silica and carbon black in combination.

Silica is preferable from the view point of the static-dynamic ratio. Carbon black is preferable from the viewpoint of strength. Silica may be wet white carbon, dry white carbon, colloidal silica, or the like. Among these, wet white carbon that contains silicic acid hydrate as the main component is preferable. Carbon black may be furnace black, acetylene black, thermal black, channel black, graphite, or the like. Among these, furnace black is preferable. Specifically, SRF, GPF, FEF, HAF, ISAF, SAF, MT, and the like are more preferable.

The filler is used in an amount of 100 parts by mass or less, preferably 5 to 100 parts by mass, and more preferably 5 to 40 parts by mass, based on 100 parts by mass of the components (A) and (B) in total (based on the total amount of rubber components when the modified hydrogenated diene polymer composition includes other rubber components).

The specific surface area by nitrogen adsorption of carbon black measured by the BET method in accordance with ASTM D 3037-81 is not particularly limited, but is preferably 5 to 200 $m^2/g$, more preferably 50 to 150 $m^2/g$, and particularly preferably 80 to 130 $m^2/g$, in order to sufficiently improve the tensile strength of the crosslinked rubber and the like. The DBP absorption of carbon black is not specifically limited, either, but is preferably 5 to 300 ml/100 g, more preferably 50 to 200 ml/100 g, and particularly preferably 80 to 160 ml/100 g, in order to sufficiently improve the strength of the crosslinked rubber.

The modified hydrogenated diene polymer composition according to this embodiment may include an amine compound insofar as the object of the present invention is not impaired. The wettability of the filler is improved by adding the amine compound to the modified hydrogenated diene polymer composition so that the dispersibility of the filler in the modified hydrogenated diene polymer composition can be improved. As a result, the durability and the vibration-proof properties of the modified hydrogenated diene polymer composition can be improved. Therefore, this situation is preferable. The amine compounds may be used either individually or in combination.

The structure of the amine compound is not particularly limited insofar as the amine compound contains an amino group. The amine compound may be a primary amine, a secondary amine, or a tertiary amine. The number of amino groups contained in the amine compound is not particularly limited. Specifically, the amine compound may be a monoamine, a diamine, a triamine, a tetramine, or a polyamine. The number of carbon atoms contained in the amine compound is not particularly limited. The number of carbon atoms contained in the amine compound is normally 1 to 20, preferably 1 to 15, more preferably 3 to 15, and still more preferably 3 to 10. The amine compound may contain a functional group other than the amino group (e.g., alkanolamine). Specific examples of the amine compound include 2-ethylhexylamine, triethanolamine, and the like.

The modified hydrogenated diene polymer composition may include the amine compound in an arbitrary amount. The amine compound is normally used in an amount of 20 parts by mass or less, preferably more than 0 to 15 parts by mass, more preferably more than 0 to 10 parts by mass, still more preferably 0.01 to 10 parts by mass, particularly preferably 0.01 to 8 parts by mass, and most preferably 0.01 to 5 parts by mass, based on 100 parts by mass of the components (A) and (B) in total.

The modified hydrogenated diene polymer composition according to this embodiment may further include various additives insofar as the object of the present invention is not impaired. Examples of the additives include a rubber extender oil, a filler, a crosslinking agent, a crosslinking promoter, a crosslinking activator, and the like.

As the rubber extender oil, a petroleum-based compounding oil such as a paraffinic process oil, an aromatic process oil, or a naphthenic process oil may be used. Among these, a paraffinic process oil is preferable. The rubber extender oil is preferably used in an amount of 150 parts by mass or less, and more preferably 100 parts by mass or less, based on 100 parts by mass of the components (A) and (B) in total (based on the total amount of rubber components when the modified hydrogenated diene polymer composition includes other rubber components). The rubber extender oil may be included in the rubber component in advance.

Specific examples of the crosslinking agent include an organoperoxide such as dicumyl peroxide and di-t-butyl peroxide, sulfur such as a sulfur powder, precipitated sulfur, colloidal sulfur, insoluble sulfur, and highly dispersibile sulfur, halogenated sulfur such as sulfur monochloride and sulfur dichloride, a quinone dioxime such as p-quinone dioxime and p,p'-dibenzoyl quinine dioxime, an organo-polyamine compound such as triethylenetetramine, hexamethylenediamine carbamate, and 4,4'-methylenebis-o-chloroaniline, an alkylphenol resin containing a methylol group, and the like. One kind of crosslinking agent may be used individually and two or more kinds of crosslinking agent may be used in combination. Alternatively, different types of crosslinking agents may be used in combination. The crosslinking agent is preferably used in an amount of 0.1 to 20 parts by mass, and more preferably 0.5 to 10 parts by mass, based on 100 parts by mass of the components (A) and (B) in total (based on the total amount of rubber components when the modified hydrogenated diene polymer composition includes other rubber components). The tensile strength of the crosslinked rubber can be sufficiently improved if the amount of the crosslinking agent is within the above range.

As the crosslinking promoter, the following crosslinking promoters (a) to (g) may be used.

(a) Sulfenamide crosslinking promoter such as N-cyclohexyl-2-benzothiazolesulfeneamide, N-t-butyl-2-benzothiazolesulfeneamide, N-oxyethylene-2-benzothiazolesulfeneamide, N-oxyethylene-2-benzothiazolesulfeneamide, and N,N'-diisopropyl-2-benzothiazolesulfeneamide
(b) Guanidine crosslinking promoter such as diphenylguanidine, diorthotolylguanidine, and orthotolylbiguanidine
(c) Thiourea crosslinking promoter such as thiocarboanilide, diorthotolyl thiourea, ethylene thiourea, diethyl thiourea, and trimethyl thiourea
(d) Thiazol crosslinking promoter such as 2-mercaptobenzothiazol, dibenzothiazil disulfide, zinc 2-mercaptobenzothiazol, sodium 2-mercaptobenzothiazol, cyclohexylamine 2-mercaptobenzothiazol, and 2-(2,4-dinitrophenylthio)benzothiazol
(e) Thiuram crosslinking promoter such as tetramethylthiuram monosulfide, tetramethylthiuram disulfide, tetraethylthiuram disulfide, tetrabutylthiuram disulfide, and dipentamethylenethiuram tetrasulfide
(f) Dithiocarbamic acid crosslinking promoter such as sodium dimethyldithiocarbamate, sodium diethyldithiocarbamate, sodium di-n-butyldithiocarbamate, lead dimethyldithiocarbamate, zinc dimethyldithiocarbamate, zinc diethyldithiocarbamate, zinc di-n-butyldithiocarbamate, zinc pentamethylenedithiocarbamate, zinc ethylphenyldithiocarbamate, tellurium diethyldithiocarbamate, selenium dimethyldithiocarbamate, selenium diethyldithiocarbamate, copper dimethyldithiocarbamate, iron dimethyldithiocarbamate, diethylamine diethyldithiocarbamate, piperidine pentamethylenedithiocarbamate, and pipecolin methylpentamethylenedithiocarbamate
(g) Xanthogenic acid crosslinking promoter such as sodium isopropylxanthogenate, zinc isopropylxanthogenate, and zinc butylxanthogenate

One kind of crosslinking promoter may be used individually and two or more kinds of crosslinking promoter may be used in combination. Alternatively, different types of crosslinking promoters may be used in combination. The crosslinking promoter is preferably used in an amount of 20 parts by mass or less, and more preferably 10 parts by mass or less, based on 100 parts by mass of the components (A) and (B) in total (based on the total amount of rubber components when the modified hydrogenated diene polymer composition includes other rubber components). An organoperoxide may be used as the crosslinking agent, and a small amount of sulfur may be added to the organoperoxide (preferably 1 to 5 parts by mass, and more preferably 2 to 4 parts by mass based on 100 parts by mass of the organoperoxide) as a crosslinking assistant.

As the crosslinking activator, a higher fatty acid (e.g., stearic acid), zinc oxide, or the like may be used. When using zinc oxide, it is preferable to use zinc oxide exhibiting high surface activity and having a particle diameter of 5 μm or less. Examples of such a zinc oxide include active zinc oxide having a particle diameter of 0.05 to 0.2 μm, zinc oxide having a particle diameter of 0.3 to 1 μm, and the like. It is also possible to use zinc oxide that has been surface-treated with an amine dispersant or a wetting agent. One kind of crosslinking activator may be used individually and two or more kinds of crosslinking activator may be used in combination. Alternatively, different types of crosslinking activators may be used in combination. The amount of the crosslinking activator may be appropriately adjusted corresponding to the type of the crosslinking activator and the like.

When using an organoperoxide crosslinking agent, sulfur, a quinone dioxime such as p-quinone dioxime, polyethylene glycol dimethacrylate, diallyl phthalate, triallyl cyanurate, divinylbenzene, or the like may be used as a crosslinking assistant. The crosslinking assistant is preferably used in an amount of 0.1 to 20 parts by mass, and more preferably 0.1 to 10 parts by mass, based on 100 parts by mass of the components (A) and (B) in total (based on the total amount of rubber components when the modified hydrogenated diene polymer composition includes other rubber components).

(Method of producing modified hydrogenated diene polymer composition)

The hydrogenated diene polymer composition according to this embodiment may be produced by mixing the components (A) and (B). The components (A) and (B) are preferably mixed in a solution or slurry state, or mixed with heating using a kneader, for example. Examples of the kneader include a banbury mixer, a mixing roll, and the like. The mixing conditions are not particularly limited (i.e., various mixing conditions may be appropriately employed). The heating temperature is preferably 100 to 220°C, and more preferably 120 to 200°C. Note that other components may optionally be added during mixing.

2. Rubber molded article

A rubber molded article according to one embodiment of the present invention is described below. The rubber molded article according to this embodiment includes a crosslinked rubber obtained by crosslinking the above modified hydrogenated diene polymer composition. Therefore, the rubber molded article according to this embodiment exhibits excellent vibration-proof- properties and heat resistance.

When producing a rubber molded article using the modified hydrogenated diene polymer composition according to the above embodiment, the crosslinking agent (e.g., peroxide), the crosslinking assistant (e.g., sulfur), and the like are added to the modified hydrogenated diene polymer composition to obtain a compounded rubber composition. The compounded rubber composition is molded into a specific shape while crosslinking the components (A) and (B) included in the modified hydrogenated diene polymer composition to produce a rubber molded article according to this embodiment.
The rubber molded article according to this embodiment is suitable as a vibration-proof rubber; a hose and a hose cover such as a diaphragm, a roll, a radiator hose, and an air hose; a seal such as packing, a gasket, a weather strip, an O-ring, and an oil seal; a belt, a lining, a dust boot, and the like. The modified hydrogenated diene polymer composition according to the above embodiment exhibits sufficient heat resistance and excellent vibration-proof properties as described above. Therefore, the rubber molded article according to this embodiment produced using the modified hydrogenated diene polymer composition is suitable as a vibration-proof rubber.

EXAMPLES

The present invention is further described below by way of examples. Note that the present invention is not limited to the following examples. In the examples and comparative examples, the units "parts" and "%" respectively refer to "parts by mass" and "mass%", unless otherwise indicated. The properties were measured and evaluated by the following methods.
Weight average molecular weight (Mw): The polystyrene-reduced weight average molecular weight of the polymer was determined by gel permeation chromatography (GPC) (column: "HLC-8120" manufactured by Tosoh Corp.) at 130°C.
Number average molecular weight (Mn): The polystyrene-reduced number average molecular weight of the polymer was determined by gel permeation chromatography (GPC) (column: "HLC-8120" manufactured by Tosoh Corp.) at 130°C.
Vinyl bond content (unhydrogenated polymer): The vinyl bond content of the polymer was calculated by the Hampton method using infrared absorption spectrometry.
Hydrogenation rate: The hydrogenation rate of the polymer was calculated from the $^1$H-NMR spectrum (270 MHz, solvent: carbon tetrachloride solution).
Functional group content: The functional group content was determined by the amine titration method described in Analy. Chem. 564 (1952). Specifically, a polymer solution is prepared by dissolving the purified polymer in an organic solvent, and $HClO_4/CH_3COOH$ was added dropwise to the polymer solution until the color of the polymer solution changed from purple to light blue using methyl violet as an indicator. The functional group content was calculated from the amount of $HClO_4/CH_3COOH$ added. The functional group content is indicated by the following formula (1).

$$\text{Functional group content} = \text{number of functional groups / polymer (single molecular chain)} \qquad (1)$$

Mooney viscosity ($ML_{1+4}$, 100°C): The Mooney viscosity was measured in accordance with JIS K 6300 using an L-rotor (preheating time: 1 min, rotor operation time: 4 min, temperature: 100°C).
cis-1,4-bond content (%): The ratio of cis-1,4-bonds to trans-1,4-bonds in the polymer was calculated from the signal intensities at 27.5 ppm (cis-1,4-bond) and 32.8 ppm (trans-1,4-bond) determined by $^{13}$C-NMR analysis.
Tensile strength at break ($T_B$) and tensile elongation at break ($E_B$): The tensile strength at break ($T_B$) and the tensile elongation at break ($E_B$) were measured in accordance with JIS K 6251 using a No. 3 specimen at a temperature of 23°C and a tensile rate of 500 mm/min (normal condition). The tensile strength at break ($T_B$) and the tensile elongation at break ($E_B$) were similarly measured at a temperature of 120°C (high-temperature condition).
Hardness (Duro A): The spring hardness (durometer A hardness) of the specimen was measured in accordance with JIS K 6253.
Dynamic modulus of elasticity: The dynamic modulus of elasticity at 70 Hz of the block-like specimen was measured in accordance with JIS K 6394 at a dynamic strain of 1% and a temperature of 25°C. The dynamic modulus of elasticity at 0.1 Hz of the specimen was similarly measured at a dynamic strain of 10% and a temperature of 25°C. A dynamic mechanical analyzer "ARES" (manufactured by Rheometric Scientific Inc.) was used for the measurement.
Static-dynamic ratio: The static-dynamic ratio was calculated by the following formula (2).

$$\text{Static-dynamic ratio} = (\text{dynamic modulus of elasticity at 70 Hz}) / (\text{dynamic modulus of elasticity at 0.1 Hz}) \quad (2)$$

(Example 1)

A 50-liter reaction vessel of which the internal atmosphere was replaced by nitrogen was charged with 28 kg of cyclohexane, 61.6 g of tetrahydrofuran, 0.61 g of n-butyllithium, 0.59g of piperidine and 1400 g of 1,3-butadiene. After adjusting the temperature of the mixture to 30°C, the mixture was subjected to adiabatic polymerization. After completion of polymerization, 2.19 g of N,N-bis(trimethylsilyl)aminopropylmethyldiethoxysilane was added to the system, and the mixture was reacted for 60 minutes so that a modifying group was introduced into an active site of the diene polymer obtained by adiabatic polymerization. After completion of polymerization, the mixture was stirred for 20 minutes while supplying hydrogen gas at a pressure of 0.4 MPa-gauge so that the polymer end remaining as a living anion reacted with lithium to produce lithium hydride. After heating the reaction solution to 90°C, the reaction solution was subjected to hydrogenation using a catalyst containing titanocene dichloride as the main component. After completion of hydrogen absorption, the reaction solution was allowed to cool to room temperature under normal pressure, and removed from the reaction vessel. The reaction solution removed from the reaction vessel was poured into water with stirring, and the solvent was removed by steam stripping to obtain a (modified) hydrogenated diene polymer (1). The modified hydrogenated diene polymer had a weight average molecular weight (Mw) of 258,000, a molecular weight distribution (Mw/Mn) of 1.20, a vinyl bond content of 39.5%, and a hydrogenation rate of 86.6%. The results are shown in Table 1.

80 parts by mass of the hydrogenated diene polymer (1) (component (A)), 20 parts by mass of natural rubber (component (B)), 5 parts by mass of zinc oxide, 1 part by mass of stearic acid, 30 parts by mass of silica, 10 parts by mass of FEF carbon, and 10 parts by mass of a softener were kneaded at 150°C for five minutes using a plastomill (volume: 250 ml) to obtain a mixture. After the addition of 5 parts by mass of a crosslinking agent and 0.2 parts by mass of a crosslinking assistant, the mixture was kneaded at 50 to 70°C for five minutes using an open roll to obtain a compounded rubber composition. The following components (1) to (7) were used to produce the compounded rubber composition.

(1) Zinc oxide: "Zinc Oxide 2" (manufactured by Hakusui Tech Co., Ltd.)
(2) Stearic acid: "Lunac S30" (manufactured by Kao Corp.)
(3) Silica: "Nipsil ER" (manufactured by Tosoh Silica Corp.)
(4) FEF carbon: "Seast SO" (manufactured by Tokai Carbon Co., Ltd.)
(6) Softener: "Diana Process PW90" (manufactured by Idemitsu Kosan Co., Ltd.)
(6) Crosslinking agent: "Percumyl D-40" (manufactured by NOF Corp.)
(7) Crosslinking assistant: "Sulfur" (manufactured by Tsurumi Kagaku Co., Ltd.)

The compounded rubber composition was heated at 170°C for 20 minutes under a press pressure of 150 $kgf/cm^2$ using a press molding machine to prepare a specimen (vulcanized rubber sheet) having a thickness of 2 mm. The specimen had a tensile strength at break ($T_B$) of 19.6 MPa, a tensile elongation at break ($E_B$) of 450%, and a hardness (Duro A) of 64.

The compounded rubber composition was heated for 20 minutes to prepare a block-like viscoelasticity test specimen. The block-like specimen had a dynamic modulus of elasticity of 2.67 MPa (at 70 Hz) and 2.07 MPa (at 0.1 Hz), and a static-dynamic ratio of 1.29. The results are shown in Table 3.

(Example 2)

A modified hydrogenated diene polymer composition was obtained in the same manner as in Example 1, except for using butadiene rubber (BR) as the component (B). The details of the diene rubber used as the component (B) are shown in Table 2. A compounded rubber composition, a specimen (vulcanized rubber sheet), and a block-like specimen were produced in the same manner as in Example 1, except for using the composition shown in Table 3. The properties of the specimen (vulcanized rubber sheet) and the block-like specimen are shown in Table 3.

(Example 3)

A 50-liter reaction vessel of which the internal atmosphere was replaced by nitrogen was charged with 28 kg of cyclohexane, 61.6 g of tetrahydrofuran, 0.61 g of n-butyllithium, 0.59 g of piperidine, and 1400 g of 1,3-butadiene. After adjusting the temperature of the mixture to 50°C, the mixture was subjected to adiabatic polymerization. After

completion of polymerization, 2.60 g of 4-{2-[N,N-bis(trimethylsilyl)amino]ethyl}styrene was added to the system, and the mixture was reacted for 60 minutes so that a modifying group was introduced into an active site of the diene polymer obtained by adiabatic polymerization. The mixture was then stirred for 20 minutes while supplying hydrogen gas at a pressure of 0.4 MPa-gauge so that the unreacted polymer end reacted with lithium to produce lithium hydride. After heating the reaction solution to 90°C, the reaction solution was subjected to hydrogenation at a hydrogen gas supply pressure of 0.7 MPa-gauge using a catalyst containing titanocene dichloride as the main component. After completion of hydrogen absorption, the reaction solution was allowed to cool to room temperature under normal pressure, and removed from the reaction vessel. The reaction solution was poured into water with stirring, and the solvent was removed by steam stripping to obtain a hydrogenated diene polymer (2). The properties of the hydrogenated diene polymer (2) are shown in Table 1. A compounded rubber composition, a specimen (vulcanized rubber sheet), and a block-like specimen were produced in the same manner as in Example 1, except for using the composition shown in Table 3. The properties of the specimen (vulcanized rubber sheet) and the block-like specimen are shown in Table 3.

(Example 4)

A 50-liter reaction vessel of which the internal atmosphere was replaced by nitrogen was charged with 28 kg of cyclohexane, 61.6 g of tetrahydrofuran, 0.61 g of n-butyllithium, 0.59 g of piperidine, and 1400 g of 1,3-butadiene. After adjusting the temperature of the mixture to 50°C, the mixture was subjected to adiabatic polymerization. After completion of polymerization, 1.13 g of N,N-bis(trimethylsilyl)aminopropyltrimethoxysilane was added to the system, and the mixture was reacted for 60 minutes so that a modifying group was introduced into an active site of the diene polymer obtained by adiabatic polymerization. The mixture was then stirred for 20 minutes while supplying hydrogen gas at a pressure of 0.4 MPa-gauge so that the polymer end remaining as a living anion reacted with lithium to produce lithium hydride. After heating the reaction solution to 90°C, the reaction solution was subjected to hydrogenation at a hydrogen gas supply pressure of 0.7 MPa-gauge using a catalyst containing titanocene dichloride as the main component. After completion of hydrogen absorption, the reaction solution was allowed to cool to room temperature under normal pressure, and removed from the reaction vessel. The reaction solution was poured into water with stirring, and the solvent was removed by steam stripping to obtain a hydrogenated diene polymer (3). The properties of the hydrogenated diene polymer (3) are shown in Table 1. A compounded rubber composition, a specimen (vulcanized rubber sheet), and a block-like specimen were produced in the same manner as in Example 1, except for using the composition shown in Table 3. The properties of the specimen (vulcanized rubber sheet) and the block-like specimen are shown in Table 3.

(Example of synthesizing diene rubber (3))

A 5-liter autoclave of which the internal atmosphere was replaced by nitrogen was charged with 2.4 kg of cyclohexane and 300 g of 1,3-butadiene in an nitrogen atmosphere. After the addition of a catalyst prepared by reacting a cyclohexane solution of neodymium versatate (0.09 mmol), a toluene solution of methylalumoxane (MAO) (1.8 mmol), diisobutylaluminum hydride (DIBAH) (5.0 mmol), a toluene solution of diethylaluminum chloride (0.18 mmol), and 1,3-butadiene (4.5 mmol) at 50°C for 30 minutes and aging the resulting product, the mixture was polymerized at 80°C for 60 minutes. The reaction conversion rate of 1,3-butadiene was about 100%. A methanol solution containing 1.5 g of 2,4-di-tert-butyl-p-cresol was added to 200 g of the polymer solution to terminate polymerization. After removing the solvent by steam stripping, the resulting product was dried using a roll at 110°C to obtain an unmodified polymer.

The remaining polymer solution was maintained at 60°C. After the addition of a toluene solution of 3-glycidoxypropyltrimethoxysilane (GPMOS) (4.5 mmol), the mixture was reacted for 30 minutes. After the addition of a toluene solution of tetraisopropyl titanate (IPOTi) (13.5 mmol), the components were mixed for 30 minutes. A methanol solution containing 1.5 g of 2,4-di-tert-butyl-p-cresol was then added to the mixture to obtain 2.5 kg of a modified polymer solution.

The modified polymer solution was added to 20 l of a sodium hydroxide aqueous solution of which the pH was adjusted to 10. A condensation reaction was carried out at 110°C for two hours while removing the solvent, followed by drying using a roll at 110°C to obtain a modified polymer (diene rubber (3)). The properties of the resulting polymer are shown in Table 2.

(Example 5)

A modified hydrogenated diene polymer composition was obtained in the same manner as in Example 1, except for using a mixture of 15 parts by mass of butadiene rubber (BR) and 5 parts by mass of the diene rubber (3) as the component (B). The details of the diene rubber used as the component (B) are shown in Table 2. A compounded rubber composition, a specimen (vulcanized rubber sheet), and a block-like specimen were produced in the same manner as in Example 1, except for using the composition shown in Table 3. The properties of the specimen (vulcanized rubber sheet) and the block-like specimen are shown in Table 3.

(Example 6)

A modified hydrogenated diene polymer composition was obtained in the same manner as in Example 1, except for using the diene rubber (3) as the component (B). The details of the diene rubber used as the component (B) are shown in Table 2. A compounded rubber composition, a specimen (vulcanized rubber sheet), and a block-like specimen were produced in the same manner as in Example 1, except for using the composition shown in Table 3. The properties of the specimen (vulcanized rubber sheet) and the block-like specimen are shown in Table 3.

(Comparative Example 1)

A modified hydrogenated diene polymer composition was obtained in the same manner as in Example 1, except for using 100 parts by mass of the component (A) without using the component (B). A compounded rubber composition, a specimen (vulcanized rubber sheet), and a block-like specimen were produced in the same manner as in Example 1, except for using the composition shown in Table 3. The properties of the specimen (vulcanized rubber sheet) and the block-like specimen are shown in Table 3.

(Comparative Example 2)

A 50-liter reaction vessel of which the internal atmosphere was replaced by nitrogen was charged with 28 kg of cyclohexane, 56 g of tetrahydrofuran, and 1400 g of 1,3-butadiene. After adjusting the temperature of the mixture to 50°C, the mixture was subjected to adiabatic polymerization. After completion of polymerization, the mixture was stirred for 20 minutes while supplying hydrogen gas at a pressure of 0.4 MPa-gauge so that the polymer end remaining as a living anion reacted with lithium to produce lithium hydride. After heating the reaction solution to 90°C, the reaction solution was subjected to hydrogenation using a catalyst containing titanocene dichloride as the main component. After completion of hydrogen absorption, the reaction solution was allowed to cool to room temperature under normal pressure, and removed from the reaction vessel. The reaction solution removed from the reaction vessel was poured into water with stirring, and the solvent was removed by steam stripping to obtain a hydrogenated diene polymer (4). The resulting hydrogenated diene polymer had a weight average molecular weight (Mw) of 255,000, a molecular weight distribution (Mw/Mn) of 1.10, a vinyl bond content of 39.0%, and a hydrogenation rate of 83.9%. The results are shown in Table 1.

A hydrogenated diene polymer composition was obtained in the same manner as in Example 1, except for using the hydrogenated diene polymer (4) as the component (A). A compounded rubber composition, a specimen (vulcanized rubber sheet), and a block-like specimen were produced in the same manner as in Example 1, except for using the composition shown in Table 3. The properties of the specimen (vulcanized rubber sheet) and the block-like specimen are shown in Table 3.

(Comparative Example 3)

A diene polymer composition was obtained in the same manner as in Example 1, except for using 100 parts by mass of the component (B) without using the component (A). A compounded rubber composition, a specimen (vulcanized rubber sheet), and a block-like specimen were produced in the same manner as in Example 1, except for using the composition shown in Table 3. The properties of the specimen (vulcanized rubber sheet) and the block-like specimen are shown in Table 3.

(Comparative Example 4)

A diene polymer composition was obtained in the same manner as in Comparative Example 3, except for using butadiene rubber (BR) as the component (B). A compounded rubber composition, a specimen (vulcanized rubber sheet), and a block-like specimen were produced in the same manner as in Example 1, except for using the composition shown in Table 3. The properties of the specimen (vulcanized rubber sheet) and the block-like specimen are shown in Table 3.

TABLE 1

| | Hydrogenated diene polymer (1) | Hydrogenated diene polymer (2) | Hydrogenated diene polymer (3) | Hydrogenated diene polymer (4) |
|---|---|---|---|---|
| Polymer skeleton | Hydrogenated BR | Hydrogenated BR | Hydrogenated BR | Hydrogenated BR |
| Modified/unmodified | Modified | Modified | Modified | Unmodified |
| Mw ($\times 10^4$) | 25.8 | 38.2 | 47.5 | 25.5 |

(continued)

| | Hydrogenated diene polymer (1) | Hydrogenated diene polymer (2) | Hydrogenated diene polymer (3) | Hydrogenated diene polymer (4) |
|---|---|---|---|---|
| Mw/Mn | 1.20 | 1.09 | 1.13 | 1.10 |
| Vinyl bond content (unhydrogenated polymer) (%) | 39.5 | 36.5 | 35.2 | 39.0 |
| Hydrogenation rate (%) | 86.6 | 92.6 | 91.1 | 83.9 |
| Functional group content (number of functional groups/polymer chain) | 3.9 | 1.3 | 1.0 | - |

TABLE 2

| | Diene rubber (1) Natural rubber (RSS#1) | Diene rubber (2) BR (BR01F) | Diene rubber (3) |
|---|---|---|---|
| Polymer skeleton | NR | BR | BR |
| Modified/unmodified | Unmodified | Unmodified | Modified |
| Mooney viscosity $ML_{1+4}$ (100°C) | 65 | 44 | 48 |
| cis-1,4-bond content (%) | - | 96 | 97 |

TABLE 3

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Polymer | Hydrogenated diene polymer (1) | 80 | 80 | | | 80 | 80 | 100 | | | |
| | Hydrogenated diene polymer (2) | | | 80 | | | | | | | |
| | Hydrogenated diene polymer (3) | | | | 80 | | | | | | |
| | Hydrogenated diene polymer (4) | | | | | | | | 80 | | |
| | Diene rubber (1) | 20 | | | | | | | 20 | 100 | |
| | Diene rubber (2) | | 20 | 20 | 20 | 15 | | | | | 100 |
| | Diene rubber (3) | | | | | 5 | 20 | | | | |
| Component | Zinc oxide | 5 | 5 | 5 | 5 | 5 | 5 | 5 | 5 | 5 | 5 |
| | Stearic acid | 1 | 1 | 1 | 1 | 1 | 1 | 1 | 1 | 1 | 1 |
| | Silica | 30 | 30 | 30 | 30 | 30 | 30 | 30 | 30 | 30 | 30 |
| | FEF carbon | 10 | 10 | 10 | 10 | 10 | 10 | 10 | 10 | 10 | 10 |
| | Softener | 10 | 10 | 10 | 10 | 10 | 10 | 10 | 10 | 10 | 10 |
| | Crosslinking agent | 5 | 5 | 5 | 5 | 5 | 5 | 5 | 5 | 5 | 5 |
| | Crosslinking assistant | 0.2 | 0.2 | 0.2 | 0.2 | 0.2 | 0.2 | 0.2 | 0.2 | 0.2 | 0.2 |
| Total | | 161.2 | 161.2 | 161.2 | 161.2 | 161.2 | 161.2 | 161.2 | 161.2 | 161.2 | 161.2 |

(continued)

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Normal condition | $T_B$ (MPa) | 19.6 | 15.3 | 15.1 | 15.3 | 18.1 | 19.1 | 19.5 | 11.1 | 22.0 | 8.2 |
| | $E_B$ (%) | 450 | 300 | 310 | 300 | 320 | 300 | 410 | 440 | 520 | 280 |
| | Hardness (Duro A) | 64 | 67 | 66 | 66 | 74 | 73 | 71 | 64 | 53 | 64 |
| High temperature condition (120°C) | $T_B$ (MPa) | 4.7 | 5.6 | 5.5 | 5.5 | 6 | 6.4 | 2.3 | 3.6 | 5.2 | 4.9 |
| | $E_B$ (%) | 210 | 170 | 170 | 170 | 180 | 180 | 90 | 190 | 320 | 170 |
| Dynamic modulus of elasticity (MPa) | 70 Hz (dynamic strain: 1%) | 2.67 | 2.60 | 2.58 | 2.61 | 3.88 | 3.97 | 3.44 | 3.94 | 1.47 | 2.82 |
| | 0.1 Hz (dynamic strain: 10%) | 2.07 | 1.99 | 1.99 | 2.00 | 3.06 | 3.04 | 2.60 | 2.25 | 1.02 | 1.99 |
| | Static-dynamic ratio | 1.29 | 1.31 | 1.30 | 1.31 | 1.27 | 1.30 | 1.32 | 1.75 | 1.44 | 1.42 |

(Discussion)

As is clear from the results shown in Table 1, the modified hydrogenated diene polymer compositions used in Examples 1 to 6 showed an excellent balance between tensile elongation at break ($E_B$) at high temperature and static-dynamic ratio, and exhibited excellent vibration-proof properties and heat resistance as compared with the diene polymer compositions used in Comparative Examples 1 to 4. The tensile elongation at break ($E_B$) at high temperature is preferably 170% or more, and the static-dynamic ratio is preferably 1.4 or less.

INDUSTRIAL APPLICABILITY

The hydrogenated diene polymer and the hydrogenated diene polymer composition according to the present invention can produce a rubber molded article that exhibits excellent vibration-proof properties and heat resistance. Therefore, the rubber molded article according to the present invention produced using the hydrogenated diene polymer or the hydrogenated diene polymer composition exhibits excellent vibration-proof properties and heat resistance, and is suitable as a vibration-proof rubber; a hose and a hose cover such as a diaphragm, a roll, a radiator hose, and an air hose; a seal such as packing, a gasket, a weather strip, an O-ring, and an oil seal; a belt, a lining, a dust boot, and the like.

## Claims

1. A modified hydrogenated diene polymer composition comprising:

    (A) a modified hydrogenated diene polymer obtained by hydrogenating a diene polymer having a vinyl bond content of 20 to 70%, the modified hydrogenated diene polymer having a weight average molecular weight (Mw) of 100,000 to 1,700,000, a molecular weight distribution (Mw/Mn) of 1.0 to 3.0, and a hydrogenation rate of 72 to 96%, and containing one or more functional groups;

        wherein the number average molecular weight (Mn) and the weight average molecular weight (Mw) are determined by gel permeation chromatography at 130°C;
        wherein the vinyl bond content is calculated by the Hampton method using infrared absorption spectrometry; and wherein the hydrogenation rate is calculated from a $^1$H-NMR spectrum; and

    (B) a diene rubber,

        the modified hydrogenated diene polymer composition containing the modified hydrogenated diene polymer (A) and the diene rubber (B) in an amount of 100 parts by mass in total, the amount of the modified hydrogenated diene polymer (A) being 60 to 95 parts by mass, and the amount of the diene rubber (B) being 5 to 40 parts by mass,
        wherein the functional groups introduced into the component (A) are chosen among an alkoxy group and an amino group,
        and the functional groups have been introduced into the component (A) by reacting a polymerization terminator containing functional groups with the active site of the diene polymer, and
        wherein the number of functional groups contained in a single molecular chain of the modified hydrogenated diene polymer (A) is 0.1 to 5.0;
        and wherein the number of functional groups contained in a single molecular chain is a value determined by titration as defined in the description.

2. Modified hydrogenated diene polymer composition according to claim 1, wherein the modified hydrogenated diene polymer (A) containing one or more functional group is a butadiene rubber, a styrene-butadiene rubber, a styrene-butadiene-isoprene random copolymer, or a butadiene-isoprene random copolymer.

3. Modified hydrogenated diene polymer composition according to claim 1 or 2, further comprising a silica-based filler.

4. Modified hydrogenated diene polymer composition according to any one of claims 1 to 3, wherein the diene rubber (B) is at least one of a natural rubber, a butadiene rubber, a styrene-butadiene rubber, a styrene-butadiene-isoprene random copolymer, and a butadiene-isoprene random copolymer.

5. A rubber molded article comprising a crosslinked rubber obtained by crosslinking the modified hydrogenated diene

polymer composition according to any one of claims 1 to 4.

## Patentansprüche

1. Modifizierte hydrogenierte Dien-Polymerzusammensetzung umfassend:

   (A) Ein durch Hydrogenieren eines Dien-Polymers mit einem Vinylbindungsgehalt von 20 bis 70% erhaltenes modifiziertes hydrogeniertes Dien-Polymer, das modifizierte hydrogenierte Dien-Polymer mit einem gewichtsmittleren Molekulargewicht (Mw) von 100.000 bis 1.700.000, einer Molekulargewichtsteilung (Mw/Mn) von 1,0 bis 3,0 und einer Hydrogenierungsrate von 72 bis 96%, und enthaltend eine oder mehrere funktionelle Gruppen;
   wobei das zahlenmittlere Molekulargewicht (Mn) und das gewichtsmittlere Molekulargewicht (Mw) durch Gelpermeationschromatographie bei 130°C bestimmt werden;
   wobei der Vinylbindungsgehalt durch die Hampton-Methode unter Verwendung von Infrarotabsorptionsspektroskopie berechnet wird;
   und wobei die Hydrogenierungsrate von einem $^{1}$H-NMR-Spektrum berechnet wird; und
   (B) einen Dien-Kautschuk,
   die modifizierte hydrogenierte Dien-Polymerzusammensetzung enthaltend das modifizierte hydrogenierte Dien-Polymer (A) und den Dien-Kautschuk (B) in einer Menge von 100 Masse-Teile im Ganzen, die Menge des modifizierten hydrogenierten Dien-Polymers (A) ist 60 bis 95 Masse-Teile, und die Menge des Dien-Kautschuks (B) ist 5 bis 40 Masse-Teile,
   wobei die in die Komponente (A) eingeführten funktionellen Gruppen unter einer Alkoxygruppe und einer Aminogruppe ausgewählt sind,
   und die funktionellen Gruppen in die Komponente (A) durch Reagieren eines funktionelle Gruppen enthaltenden Polymerisationsterminators mit der aktiven Seite des Dien-Polymers eingeführt wurden, und
   wobei die Anzahl an in einer einzelnen Molekularkette des modifizierten hydrogenierten Dien-Polymers (A) enthaltenen funktionellen Gruppen 0,1 bis 5,0 ist;
   und wobei die Anzahl an in einer einzelnen Molekularkette enthaltenen funktionellen Gruppen ein durch Titration berechneter Wert ist wie in der Beschreibung definiert.

2. Modifizierte hydrogenierte Dien-Polymerzusammensetzung nach Anspruch 1, wobei das ein oder mehrere funktionelle Gruppen enthaltende modifizierte hydrogenierte Dien-Polymer (A) ein Butadien-Kautschuk, ein Styrol-Butadien-Kautschuk, ein Styrol-Butadien-Isopropen-Random-Copolymer, oder ein Butadien-Isopren-Random-Copolymer ist.

3. Modifizierte hydrogenierte Dien-Polymerzusammensetzung nach Anspruch 1 oder 2, ferner umfassend einen Silikat-basierten Füller.

4. Modifizierte hydrogenierte Dien-Polymerzusammensetzung nach einem der Ansprüche 1 bis 3, wobei der Dien-Kautschuk (B) zumindest einer von einem Naturkautschuk, einem Butadien-Kautschuk, einem Styrol-Butadien-Kautschuk, einem Styrol-Butadien-Isopren-Random-Copolymer, und einem Butadien-Isopren-Random-Copolymer ist.

5. Kautschukformkörper umfassend einen durch Quervernetzen der modifizierten hydrogenierten Dien-Polymerzusammensetzung nach einem der Ansprüche 1 bis 4 erhaltenen quervernetzten Kautschuk.

## Revendications

1. Composition de polymère de diène hydrogéné modifié comprenant :

   (A) un polymère de diène hydrogéné modifié obtenu par hydrogénation d’un polymère de diène ayant une teneur en liaisons vinyle de 20 à 70 %, le polymère de diène hydrogéné modifié ayant une masse moléculaire moyenne en masse (Mw) de 100 000 à 1 700 000, une distribution des masses moléculaires (Mw/Mn) de 1,0 à 3,0, et un taux d’hydrogénation de 72 à 96 %, et contenant un ou plusieurs groupes fonctionnels ;
   dans lequel la masse moléculaire moyenne en nombre (Mn) et la masse moléculaire moyenne en masse (Mw) sont déterminées par chromatographie d’exclusion diffusion à 130°C ;
   dans lequel la teneur en liaisons vinyle est calculée par le procédé de Hampton utilisant une spectrométrie

d'absorption des infrarouges ;
et dans lequel le taux d'hydrogénation est calculé à partir d'un spectre de RMN-$^{1}$H ; et
(B) un caoutchouc de diène,
la composition de polymère de diène hydrogéné modifié contenant le polymère de diène hydrogéné modifié (A) et le caoutchouc de diène (B) en une quantité de 100 parties en masse au total, la quantité du polymère de diène hydrogéné modifié (A) étant de 60 à 95 parties en masse, et la quantité du caoutchouc de diène (B) étant de 5 à 40 parties en masse,
dans laquelle les groupes fonctionnels introduits dans le composant (A) sont choisis parmi un groupe alcoxy et un groupe amino,
et les groupes fonctionnels ont été introduits dans le composant (A) par réaction d'un terminateur de polymérisation contenant des groupes fonctionnels avec le site actif du polymère de diène, et
dans laquelle le nombre de groupes fonctionnels contenus dans une seule chaîne moléculaire du polymère de diène hydrogéné modifié (A) est de 0,1 à 5,0 ;
et dans laquelle le nombre de groupes fonctionnels contenus dans une seule chaîne moléculaire est une valeur déterminée par titrage comme défini dans la description.

**2.** Composition de polymère de diène hydrogéné modifié selon la revendication 1, dans laquelle le polymère de diène hydrogéné modifié (A) contenant un ou plusieurs groupes fonctionnels est un caoutchouc de butadiène, un caoutchouc de styrène-butadiène, un copolymère statistique de styrène-butadiène-isoprène, ou un copolymère statistique de butadiène-isoprène.

**3.** Composition de polymère de diène hydrogéné modifié selon la revendication 1 ou 2, comprenant en outre une charge à base de silice.

**4.** Composition de polymère de diène hydrogéné modifié selon l'une quelconque des revendications 1 à 3, dans laquelle le caoutchouc de diène (B) est au moins l'un parmi un caoutchouc naturel, un caoutchouc de butadiène, un caoutchouc de styrène-butadiène, un copolymère statistique de styrène-butadiène-isoprène, et un copolymère statistique de butadiène-isoprène.

**5.** Article moulé en caoutchouc comprenant un caoutchouc réticulé obtenu par réticulation de la composition de polymère de diène hydrogéné modifié selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005171276 A1
- JP 2004067831 A
- JP 2004083622 A
- JP 1275605 A
- JP 5271326 A
- JP 5271325 A
- JP 5222115 A
- JP 11292924 A
- JP 2000037632 A
- JP 59133203 A
- JP 63005401 A
- JP 62218403 A
- JP 7090017 A
- JP 4319960 B
- JP 47040473 B

### Non-patent literature cited in the description

- *Analy. Chem.,* 1952, 564
- *Analy. Chem.,* 1952, vol. 564